(19) **Europäisches Patentamt / European Patent Office / Office européen des brevets**

(11) **EP 4 454 119 B1**

(12) **FASCICULE DE BREVET EUROPEEN**

(45) Date de publication et mention de la délivrance du brevet:
**12.11.2025 Bulletin 2025/46**

(21) Numéro de dépôt: **22830738.5**

(22) Date de dépôt: **06.12.2022**

(51) Classification Internationale des Brevets (IPC):
***H02P 21/14*** *(2016.01)*

(52) Classification Coopérative des Brevets (CPC):
**H02P 21/14**

(86) Numéro de dépôt international:
**PCT/EP2022/084564**

(87) Numéro de publication internationale:
**WO 2023/117402 (29.06.2023 Gazette 2023/26)**

(54) **PROCEDE ET SYSTEME DE COMMANDE D'UNE MACHINE ELECTRIQUE PILOTEE PAR UN ONDULEUR POURVU DE PLUSIEURS BRAS DE COMMUTATION**

VERFAHREN UND SYSTEM ZUR STEUERUNG EINER ELEKTRISCHEN MASCHINE, DIE VON EINEM WECHSELRICHTER MIT MEHREREN SCHALTARMEN ANGETRIEBEN WIRD

METHOD AND SYSTEM FOR CONTROLLING AN ELECTRIC MACHINE DRIVEN BY AN INVERTER PROVIDED WITH A PLURALITY OF SWITCHING ARMS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.12.2021 FR 2113962**

(43) Date de publication de la demande:
**30.10.2024 Bulletin 2024/44**

(73) Titulaire: **IFP Energies nouvelles
92500 Rueil-Malmaison (FR)**

(72) Inventeurs:
• **VIDAL-NAQUET, Fabien**
**92852 RUEIL-MALMAISON CEDEX (FR)**
• **ZEIN, Ismail**
**92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**US-A1- 2010 253 252      US-A1- 2013 020 971
US-A1- 2017 085 200**

**EP 4 454 119 B1**

**Description**

**Domaine technique**

La présente invention concerne un procédé de commande d'une machine électrique tournante, de préférence une machine électrique synchrone, par exemple du type synchro-réluctante ou synchrone à aimants permanents.

L'invention concerne également un système de commande mettant en œuvre un tel procédé.

Il est connu d'avoir recours à des machines électriques tournantes telles que des machines électriques synchrones à aimants permanents ou des machines synchro-réluctantes, en particulier des machines synchro-réluctantes assistées d'aimants permanents. De telles machines électriques sont, par exemple, utilisées dans le domaine de la propulsion, par exemple pour la génération de couples moteurs à bord d'un véhicule tel qu'un véhicule automobile.

Le document FR 3 051 296 A1 décrit, par exemple, une machine synchro-réluctante assistée d'aimants permanents.

Un procédé de commande d'une telle machine électrique comprend généralement le calcul de courants et de tensions dits « directs » et « en quadrature » (également appelé « quadratique »), qui sont des courants et des tensions exprimés dans un repère tournant lié au rotor, et la mise en œuvre de deux asservissements, l'un portant sur les grandeurs dites « directes », et l'autre portant sur les grandeurs dites « en quadrature », afin de déterminer les tensions à appliquer à chaque phase de la machine tournante.

Par conséquent, déterminer les composantes, référentielles, directes et en quadrature du courant de stator est une étape cruciale à ce niveau, et ceci afin de garantir un niveau optimal de performance de la machine électrique. La complexité de la détermination du courant de référence dépend en effet de la nature de la machine utilisée :

- Pour une machine synchrone à pôles lisses, les composantes directes et quadratiques du courant peuvent s'obtenir d'une manière linéaire et directe du couple demandé, et
- Pour d'autres machines, telles que les machines synchro-reluctantes, l'obtention des composantes de référence du courant de stator fait appel à des méthodes plus sophistiquées et plus complexes.

**Technique antérieure**

Le choix d'une méthode de détermination des consignes de courant directe et en quadrature tient compte du niveau de performance souhaité et du volume de calcul en temps réel ; sujet qui a été largement traité par la littérature industrielle et académique. Dans ce contexte, on peut citer les méthodes suivantes :

a) La méthode Maximum Torque Per Ampere (MTPA, pouvant être traduit par couple maximum par ampère) qui détermine les composantes directe (Id) et en quadrature (Iq) du courant par une solution optimale de l'angle du vecteur de courant de stator. Elle est utilisée lorsque l'amplitude de la tension est inférieure au seuil maximal. Une phase de défluxage (on appelle défluxage la diminution du flux pour augmenter la vitesse de rotation de la machine électrique au-delà de sa valeur nominale sans augmenter la tension d'alimentation), par un retour de l'erreur sur l'amplitude de la tension de référence, est intégrée quand la tension dépasse le seuil maximal. Dans ce sens, on distingue dans la littérature, deux façons de réaliser le défluxage à travers l'angle de courant de stator :

- Le retour de l'erreur de tension qui agit directement sur la composante directe de courant (Id), et
- Le retour de l'erreur de tension qui agit sur l'angle du vecteur de courant.

b) Une méthode pour laquelle, les composantes du courant Id et Iq sont déterminées par des tables de données hors ligne, obtenues à partir de méthodes et de modèles optimaux de couple et de flux. Une phase de défluxage par un retour de l'erreur de tension peut être intégrée lorsque son amplitude de tension dépasse un seuil maximal.

c) Une méthode, pour laquelle, les composantes du courant Id et Iq sont déterminées par MTPA et par un régulateur d'une seule composante de courant (souvent la composante directe Id) pour définir l'angle de tension en zone de défluxage.

d) Une méthode pour laquelle, les composantes de courant Id et Iq sont déterminées par des algorithmes simplifiés d'optimisation en temps réel d'un modèle fondé sur des inductances indépendantes des composantes du courant de stator.

D'autres exemples de procédés et systèmes de commande de machine électrique synchrone sont décrits notamment dans les demandes de brevet US 9479102, US 2017/085200 A1, US 9768719, US 7586286, US 6936991 et

EP 4 454 119 B1

US 9614473.

La demande de brevet US 9479102 décrit un système et une méthode de commande d'une machine électrique synchrone. La commande de la machine électrique synchrone est basée sur une consigne de couple et sur une estimation du flux magnétique lié au rotor. Cette commande permet une opération de défluxage de la machine électrique. Toutefois, une telle méthode peut ne pas être robuste à la limite de tension de bus DC.

En outre, les demandes de brevet US 2017/085200 A1 et US 9768719 décrivent des méthodes et des systèmes de commande de machine électrique synchrone avec des aimants permanents. La commande de la machine électrique est basée sur des tables MTPA (de l'anglais « Maximum Torque Per Ampere » pouvant être traduit par maximum de couple par ampère). De plus, la commande modifie les consignes de courant en fonction de la limite de tension de la machine électrique. Par conséquent, en modifiant les consignes de courant après l'utilisation des tables MTPA, cette commande ne garantit pas l'exactitude de la détermination de la tension limite, ce qui peut impliquer une surutilisation ou une sous-utilisation de la tension de bus de l'onduleur.

Dans les demandes de brevet US 7586286 et US 6936991, la détermination de composantes de courant Id et Iq est basée sur une méthode de Peak Torque Per Ampere (méthode équivalente à MTPA et pouvant être traduit par pic de couple par ampère) avec une limitation de la tension par un modèle mathématique de la machine en régime permanent. Les inductances de la machine électrique sont supposées indépendantes des composantes de courant Id et Iq, ce qui ne permet pas d'obtenir des composantes de courant optimales pour tous les types de machines électriques.

Dans la demande de brevet US 9614473, les composantes de courant Id et Iq sont déterminées par la méthode MTPA avec insertion d'une phase de défluxage via des tables des données. L'angle de la tension est adapté par un régulateur de couple qui utilise une valeur désirée et un estimateur de couple. L'utilisation de tables de données simples ne permet pas, toujours, l'obtention d'une consigne de contrôle optimale de la machine électrique.

**Résumé de l'invention**

L'invention a pour but de contrôler une machine électrique tournante et de garantir deux objectifs :

- Le calcul en temps réel de consignes optimales de courant pour tous types de machines électriques, et
- Une utilisation optimale de la tension de bus continue DC, permettant l'amélioration du rendement de la machine électrique et/ou de la performance maximale de la machine électrique, même pour des modèles de calcul de consignes de courant optimales imparfaits.

Dans ce but, la présente invention concerne un procédé et un système de commande d'une machine électrique synchronique pilotée par un onduleur, dans lequel on détermine la commande de l'onduleur. Le procédé et le système de commande selon l'invention mettent en œuvre un modèle de contrôle qui calcule les consignes de courant optimales en fonction de la consigne de couple ou de la consigne de vitesse et d'autres variables de fonctionnement, dont une variable de fonctionnement corrigée. La correction de cette variable de fonctionnement est mise en œuvre au moyen d'une boucle de rétroaction asservissant la tension de commande de la machine électrique.

L'invention concerne un procédé de commande d'une machine électrique pilotée par un onduleur pourvu de plusieurs bras de commutation. Pour ce procédé, on met en œuvre au moins les étapes suivantes :

a. On acquiert une consigne de couple de ladite machine électrique ;

b. On acquiert une consigne ou une mesure d'une pluralité de variables de fonctionnement de ladite machine électrique ;

c. On détermine un paramètre de correction d'une desdites variables de fonctionnement en fonction d'une prédiction de tension absolue dépendante de courants dans les phases de ladite machine électrique et en fonction de consignes de tension ;

d. On identifie une zone de fonctionnement de ladite machine électrique en fonction de ladite consigne de couple et desdites variables de fonctionnement de ladite machine électrique, une desdites variables de fonctionnement étant corrigée au moyen dudit paramètre de correction.

e. On détermine des consignes de courant de ladite machine électrique en fonction de ladite consigne de couple acquise, desdites variables de fonctionnement acquise, une desdites variables de fonctionnement étant corrigée au moyen dudit paramètre de correction, et au moyen d'un algorithme récursif qui résout un système d'équations qui dépend de ladite zone de fonctionnement identifiée et d'un modèle dynamique de ladite machine électrique, ledit modèle dynamique de ladite machine électrique reliant notamment le couple de la machine électrique aux courants de ladite machine électrique ;

f. On détermine un signal de commande de commutation dudit onduleur au moyen desdites consignes de courant ; et

g. On commande ledit onduleur au moyen dudit signal de commande de commutation.

3

Selon un mode de réalisation, on définit préalablement au moins deux zones de fonctionnement de ladite machine électrique délimitées par un seuil prédéfini pour au moins une variable de fonctionnement, de préférence on prédéfinit ledit seuil en fonction d'une contrainte d'utilisation de ladite machine électrique, tel qu'un maximum ou un minimum de ladite variable de fonctionnement considérée.

Conformément à une mise en œuvre, ladite au moins une variable de fonctionnement est choisie parmi l'amplitude de tension de ladite machine électrique, l'amplitude de courant de ladite machine électrique, la vitesse de rotation du rotor de ladite machine électrique, une température de la machine électrique.

Avantageusement, on définit les zones de fonctionnement suivantes :

- Une première zone de fonctionnement pour laquelle l'amplitude de courant est inférieure à un seuil de courant, et l'amplitude de tension est inférieure à un seuil de tension,
- Une deuxième zone de fonctionnement pour laquelle l'amplitude de courant est supérieure ou égale audit seuil de courant, et l'amplitude de tension est inférieure audit seuil de tension,
- Une troisième zone de fonctionnement pour laquelle l'amplitude de courant est supérieure ou égale audit seuil de courant, l'amplitude de tension est supérieure ou égale audit seuil de tension, et la vitesse de rotation du rotor est inférieure à la vitesse de rotation de maintien de puissance maximale de ladite machine électrique,
- Une quatrième zone de fonctionnement pour laquelle l'amplitude de courant est inférieure audit seuil de courant, et l'amplitude de tension est supérieure ou égale audit seuil de tension, et
- Eventuellement une cinquième zone de fonctionnement pour laquelle l'amplitude de courant est supérieure ou égale audit seuil de courant, l'amplitude de tension est supérieure ou égale audit seuil de tension, et la vitesse de rotation du rotor est supérieure à ladite vitesse de rotation de maintien de puissance maximale de ladite machine électrique.

Selon un aspect, on construit ledit modèle dynamique de ladite machine électrique à partir des

$$\begin{cases} \dfrac{di_d}{dt} = -\dfrac{R_s}{L_d}i_d + \dfrac{L_q}{L_d}\omega i_q + \dfrac{1}{L_d}v_d \\[2mm] \dfrac{di_q}{dt} = -\dfrac{R_s}{L_q}i_q - \dfrac{L_d}{L_q}\omega i_d + \dfrac{1}{L_q}v_q - \dfrac{\phi}{L_q}\omega \end{cases} \qquad C_{em} = \tfrac{3}{2}P(\phi_d i_q - \phi_q i_d)$$

équations suivantes : et

avec $i_d$, $i_q$ : les composantes directe et en quadrature du courant de stator de ladite machine électrique, $v_d$, $v_q$ ; les composantes directe et en quadrature de la tension dudit stator de ladite machine électrique, $\phi$ le flux des aimants du rotor de ladite machine électrique avec $\phi$ le flux direct, et $\phi_q$ le flux en quadrature, w la pulsation électrique, $R_s$ la résistance de stator, $L_d$ l'inductance directe de ladite machine électrique, $L_q$ l'inductance en quadrature de ladite machine électrique, $C_{em}$ le couple de la machine électrique, P est le nombre de paires de pôles de ladite machine électrique, de préférence ladite résistance de stator et ledit flux des aimants du rotor de ladite machine électrique sont dépendants de leur températures respectives et/ou de préférence les inductances directe Ld et quadrature Lq sont non constants.

Selon une option de réalisation, ledit algorithme récursif met en œuvre, en partant d'une valeur initiale ou précédente appropriée, une résolution récursive d'équations de Langrange dudit

$$X_{y,k} = X_{y,k-1} - (J_{y,k})^{-1}\nabla L_{y,k}$$

système d'équation, et s'écrit : avec X un vecteur contenant les consignes de courants optimales et les facteurs des contraintes des équations de Lagrange des zones de fonctionnement, k l'incrément de temps, l'indice y représente lesdites zones de fonctionnement, $\nabla L_{y,k-1}$ le gradient des équations de Lagrange, $J_{y,k-1}$ la matrice Jacobienne.

De manière avantageuse, ledit algorithme récursif met en oeuvre une méthode de Newton-Raphson au premier ordre pour développer ladite matrice Jacobienne dudit système d'équation.

Conformément à un mode de réalisation, on détermine, par un estimateur, ladite prédiction de tension absolue au moyen desdites consignes de courant ou au moyen de mesures desdits courants dans les phases de ladite machine électrique.

Selon une mise en œuvre, on détermine lesdites consignes de tension au moyen d'au moins un régulateur proportionnel intégral et desdites consignes de courant.

Avantageusement, on détermine ledit paramètre de correction en mettant en œuvre les étapes suivantes :

i) On détermine une prédiction de tension absolue ;

ii) On détermine lesdites consignes de tension ;

iii) On calcule une tension absolue de consigne par la formule : $V_{abs}^{sp} = \sqrt{V_d^{sp\,2} + V_q^{sp\,2}}$ , $V_d{}^{sp}$ et $V_q{}^{sp}$ étant respectivement les consignes de tension directe et en quadrature

iv) On compare ladite prédiction de tension absolue à ladite tension absolue de consigne ; et

v) On en déduit ledit paramètre de correction à partir de ladite comparaison.

De préférence, on détermine ledit signal de commande au moyen desdites consignes de tension et d'un contrôle vectoriel.

Conformément à un aspect, ladite variable de fonctionnement corrigée est la vitesse de rotation de ladite machine électrique, la tension de bus continue de l'onduleur ou la norme de La tension de commande maximale de l'onduleur.

De plus, l'invention concerne un système de commande d'une machine électrique synchrone comprenant un onduleur pourvu de bras de commutation, un calculateur et une mémoire configurée pour mettre en œuvre les étapes du procédé de commande selon l'une des caractéristiques précédentes pour commander ledit onduleur, de préférence ladite machine électrique est une machine synchro-réluctante assistée par des aimants permanents ou une machine synchrone à aimants permanents.

D'autres caractéristiques et avantages du procédé et du système selon l'invention, apparaîtront à la lecture de la description ci-après d'exemples non limitatifs de réalisations, en se référant aux figures annexées et décrites ci-après.

## Liste des figures

La figure 1 illustre le système de commande selon un mode de réalisation de l'invention.

La figure 2 illustre les étapes du procédé de commande selon un premier mode de réalisation de l'invention.

La figure 3 illustre les étapes du procédé de commande selon un deuxième mode de réalisation de l'invention.

La figure 4 illustre les étapes de la détermination des consignes de courant selon une mise en œuvre de l'invention.

La figure 5 illustre les étapes du procédé de commande selon un troisième mode de réalisation de l'invention.

La figure 6 illustre les étapes du procédé de commande selon un quatrième mode de réalisation de l'invention.

La figure 7 illustre les étapes du procédé de commande selon un cinquième mode de réalisation de l'invention.

La figure 8 illustre plusieurs zones de fonctionnement mises en œuvre dans un mode de réalisation du procédé de commande selon l'invention.

## Description des modes de réalisation

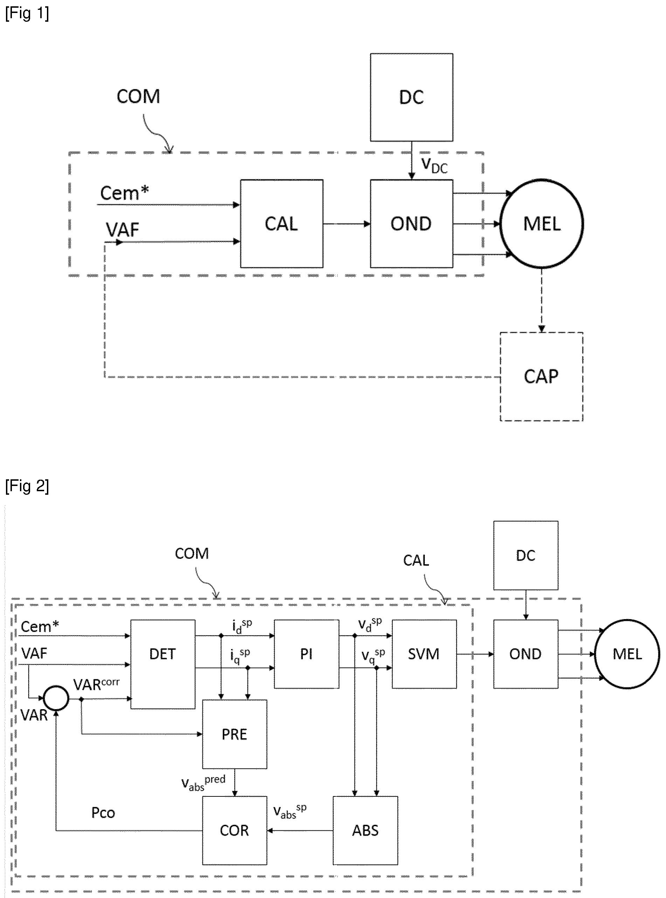

Sur la figure 1 est représentée, schématiquement et de manière non limitative, une installation comprenant une machine électrique tournante MEL associée, pour sa commande, à un système de commande COM selon l'invention (le système de commande COM mettant en œuvre le procédé de commande selon l'invention). L'installation comporte également une source DC d'énergie électrique, telle qu'un bus de tension continue.

La machine électrique tournante MEL est une machine tournante avec plusieurs phases, de préférence trois phases (alternativement la machine électrique peut comporter un nombre de phases multiple de trois, par exemple six, neuf ou douze, ou encore quatre ou cinq phases). Avantageusement, la machine électrique tournante MEL peut être une machine électrique synchrone. De préférence, la machine électrique synchrone MEL peut être une machine électrique synchrone à aimants permanents ou synchro-réluctante, en particulier une machine tournante triphasée synchro-réluctante assistée d'aimants permanents. En effet, de telles machines électriques possèdent des capacités de défluxage importantes.

Pour l'exemple illustré (non limitatif), la machine électrique synchrone MEL comporte trois entrées. Chaque entrée correspond à une phase d'un stator (non représenté) de la machine électrique tournante MEL.

Le système de commande COM est destiné à piloter, au cours du temps, l'alimentation de la machine tournante MEL en fonction de valeurs cibles et/ou de valeurs mesurées de grandeurs prédéterminées. Ces valeurs cibles et/ou valeurs mesurées sont appelées dans la suite de la description variables de fonctionnement de la machine électrique. Pour le procédé et le système selon l'invention, le système de commande COM prend en compte une consigne de couple Cem* (qui peut provenir classiquement d'une demande de l'utilisateur de la machine électrique, alternativement cette consigne de couple peut être calculée par une régulation de vitesse), et au moins une autre variable de fonctionnement VAF qui peut être une mesure ou une consigne. On appelle variable de fonctionnement de la machine électrique, une grandeur qui caractérise le fonctionnement de la machine électrique, il peut s'agir notamment d'une variable électrique, comme la tension, le courant, ou la puissance de la machine électrique, une variable mécanique comme la position, la vitesse ou l'accélération du rotor de la machine électrique, etc. Les variables de fonctionnement peuvent par exemple être la vitesse de rotation électrique $\omega_e$ du rotor (non représenté) de la machine électrique (alternativement cette variable peut aussi être la norme du flux magnétique dans les phases), l'amplitude de tension de la machine électrique, l'amplitude du courant de la machine électrique, une température de la machine électrique, etc. On rappelle que la vitesse de rotation électrique $\omega_e$ du rotor correspond à la multiplication de la vitesse de rotation mécanique $\omega_m$, du rotor par le nombre de paires de pôles de la machine électrique synchrone MEL. En d'autres termes, on peut écrire : $\omega_e = p.\omega_m$ avec p le nombre de paires de pôles de la machine électrique synchrone MEL.

Le système de commande COM comporte un onduleur OND et un calculateur CAL. Le système de commande COM peut comporter si besoin un capteur CAP de position angulaire et/ou de vitesse de rotation angulaire du rotor de la machine électrique MEL. Un tel capteur permet de déterminer la vitesse de rotation angulaire $\omega_m$ de la machine électrique soit directement (cas d'un capteur de vitesse), soit par dérivation (cas du capteur de position). En outre, le système de commande COM peut comporter des moyens de mesure des courants (non représentés) dans les phases de la machine électrique, par exemple des capteurs de courant.

L'onduleur OND est configuré pour acheminer de l'énergie électrique entre la source DC et la machine électrique synchrone MEL. Plus précisément, l'onduleur OND est configuré pour acheminer de l'énergie électrique entre la source DC et chaque phase du stator de la machine électrique synchrone MEL. La source DC (par exemple une batterie) fournit une tension de bus continu, notée $V_{DC}$.

L'onduleur OND comporte une première entrée reliée à la source DC, et trois sorties, chacune reliée à une phase correspondante du stator de la machine électrique synchrone MEL. L'onduleur OND comporte, en outre, une deuxième entrée électriquement reliée à une sortie du calculateur CAL, de sorte que l'onduleur OND est configuré pour acheminer de l'énergie électrique entre la source DC et la machine électrique synchrone MEL en fonction d'un signal de commande de commutation appliqué par le calculateur CAL à la deuxième entrée de l'onduleur OND.

De préférence, le signal de commande de commutation peut être tel que l'onduleur OND achemine de l'énergie électrique depuis la source DC vers la machine électrique synchrone MEL de sorte que la machine électrique synchrone MEL présente un fonctionnement communément appelé « moteur » et/ou un fonctionnement communément appelé « générateur ». Classiquement, l'onduleur OND comporte plusieurs bras de commutation (non représenté), de préférence au moins un bras de commutation pour chaque phase de la machine électrique, pour transformer le signal continu depuis la source DC en un signal alternatif pour les phases de la machine électrique MEL. Chaque bras de commutation comporte au moins un commutateur commandé. De manière classique, on peut commander chaque commutateur des bras de commutation au moyen d'une modulation de largeur d'impulsion connu sous l'acronyme MLI (ou PWM de l'anglais Pulse Width Modulation).

Le capteur optionnel de position angulaire ou de vitesse de rotation angulaire CAP peut être configuré pour mesurer la position mécanique angulaire, d'un rotor (non représenté) de la machine électrique synchrone par rapport au stator (non représenté), et pour délivrer un signal de position angulaire (respectivement de vitesse de rotation angulaire) représentatif de la valeur mesurée de la position angulaire (respectivement de la vitesse de rotation angulaire) du rotor de la machine électrique synchrone.

En outre, le capteur optionnel CAP de position angulaire ou de vitesse de rotation angulaire peut être configuré pour appliquer le signal de position angulaire (respectivement de vitesse de rotation angulaire) à une entrée correspondante du calculateur CAL.

Le procédé de commande d'une machine électrique synchrone selon l'invention comporte les étapes suivantes en temps réel :

- Réception de la consigne de couple de la machine électrique synchrone,
- Acquisition d'une consigne ou une mesure d'une pluralité de variables de fonctionnement de la machine électrique,
- Détermination d'un paramètre de correction d'une variable de fonctionnement, en fonction d'une prédiction (estimation) de tension absolue dépendante des courants dans les phases de la machine électrique ou des consignes des courants, et en fonction de consignes de tension (notamment en fonction de la tension absolue de consigne),

- Identification d'une zone de fonctionnement de la machine électrique en fonction de la consigne de couple et des variables de fonctionnement de la machine électrique, parmi lesquelles une des variables de fonctionnement est corrigée à l'aide du paramètre de correction,
- Détermination de consignes de courant de la machine électrique synchrone, au moyen d'un algorithme récursif qui résout un système d'équations en fonction de la zone de fonctionnement identifiée, et au moyen d'au moins un modèle dynamique de la machine électrique, le modèle dynamique de la machine électrique relie :

  o La consigne de couple,
  o La variable de fonctionnement corrigée au moyen dudit paramètre de correction,
  o Les autres variables de fonctionnement (non corrigées), et
  o Les consignes de courant : les consignes de courants dits « direct » et « en quadrature », ou de manière analogue, la consigne de la norme de courant et de l'angle de défluxage)

- Détermination d'un signal de commande de commutation de l'onduleur au moyen des consignes de courant, et
- Commande de l'onduleur au moyen du signal de commande de commutation.

Ces étapes peuvent être mises en œuvre notamment par un calculateur et une mémoire informatique, dédiés pour les temps réels.

Dans la suite de la description et dans les revendications, le terme « consignes de courant » désigne soit les consignes de courant « direct » et « en quadrature », soit la norme de courant et l'angle de défluxage, ou tout autre représentation équivalente des courants.

Ainsi, le procédé de commande selon l'invention détermine, en temps réel, des consignes de tension, sur la base de consignes optimales de courant, en prenant en compte une valeur adaptée de la variable de fonctionnement corrigée, ainsi qu'une zone de fonctionnement adaptée. Cette valeur adaptée de la variable de fonctionnement corrigée étant obtenue notamment au moyen des consignes ou des mesures de courant et de couple, formant une boucle de retour (rétroaction) dans le procédé de commande. De plus, le procédé de commande ne modifie pas directement les consignes de tension déterminées, mais uniquement les consignes de courant, dans le but de maîtriser lesdites consignes de tension. De cette manière, le procédé de commande selon l'invention peut utiliser, en temps réel, de manière optimale et robuste la tension de bus continu. Grâce à cela, le procédé de commande est robuste, par exemple robuste à la variation de la limite de tension de bus DC, et les performances et/ou le rendement de la machine électrique synchrone peuvent être améliorés, même pour un modèle dynamique imparfait. En outre, le procédé de commande selon l'invention permet une opération de défluxage de la machine électrique synchrone. En outre, ces étapes peuvent être adaptées à tous les types de machine électrique tournant synchrone.

Selon un mode de réalisation de l'invention, on peut mettre en œuvre préalablement et hors ligne les étapes suivantes :

- On construit un modèle dynamique de la machine électrique, le modèle dynamique reliant le couple de la machine électrique aux courants de la machine électrique,
- On définit au moins deux zones de fonctionnement de la machine électrique, ces zones étant délimitées par un ou des seuil(s) d'au moins un des variables de fonctionnement de la machine électrique.

On appelle seuil d'une variable de fonctionnement de la machine électrique, une limite de fonctionnement de la machine électrique liée à la variable de fonctionnement considérée. Ces seuils définissent des contraintes de fonctionnement de la machine électrique. On peut définir un tel seuil en fonction de contraintes d'utilisation de la machine électrique, telles qu'un maximum ou un minimum de la variable de fonctionnement concerné. Par exemples :

- lorsque la variable de fonctionnement est l'amplitude de tension de la machine électrique, le seuil peut être la tension maximale de la machine électrique,
- lorsque la variable de fonctionnement est l'amplitude de courant de la machine électrique, le seuil peut être le courant maximal de la machine électrique,
- lorsque la variable de fonctionnement est la vitesse de rotation du rotor de la machine électrique, le seuil peut être la vitesse de rotation d'entrée dans la zone d'optimisation MTPV (de l'anglais Maximum Torque per Volt pouvant être traduit par couple maximal par volt).

On peut définir ces seuils à partir de données constructeurs de la machine électrique ou de données obtenues expérimentalement. De plus, selon un mode de réalisation de l'invention, on peut définir ces seuils en prenant en compte d'autres données variables de la machine électrique, et ainsi ces seuils peuvent varier dans le temps. Alternativement, les seuils peuvent être constants dans le temps.

Par exemple, la tension maximale peut dépendre de la tension de la batterie qui alimente la machine électrique, cette tension de la batterie pouvant être considérée comme variable et pouvant être mesurée en temps réel. Par exemple, on peut écrire l'équation suivante :

$V_{smax} = mV_{bat}$ avec $V_{smax}$ la tension maximale de la machine électrique, $V_{bat}$ la tension de la batterie et m l'indice de Modulation de Largeur de l'Impulsion (MLI) utilisé.

On identifie des zones de fonctionnement de la machine électrique au moyen du ou des seuil(s) défini(s) pour la ou les variable(s) de fonctionnement considérée(s), et en particulier pour la variable de fonctionnement corrigée. Par exemple, si on considère un unique seuil pour une unique variable, on peut identifier une première zone pour laquelle la variable de fonctionnement est inférieure au seuil, et une deuxième zone pour laquelle la variable de fonctionnement est supérieure ou égale au seuil.

L'identification de la zone de fonctionnement au moyen de la variable de fonctionnement corrigée, permet d'adapter la détermination des consignes de courant à la correction apportée, ce qui apporte de la robustesse au procédé selon l'invention.

Pour le mode de réalisation pour lequel on considère les trois variables de fonctionnement : amplitude de tension, amplitude de courant et vitesse de rotation du rotor, on peut définir au moins quatre zones de fonctionnement de la machine électrique :

- Une première zone de fonctionnement pour laquelle l'amplitude de courant est inférieure à un seuil de courant (par exemple le courant maximal), et l'amplitude de tension est inférieure à un seuil de tension (par exemple la tension maximale),
- Une deuxième zone de fonctionnement pour laquelle l'amplitude de courant est supérieure ou égale au seuil de courant (par exemple le courant maximal), et l'amplitude de tension est inférieure au seuil de tension (par exemple la tension maximale),
- Une troisième zone de fonctionnement pour laquelle l'amplitude de courant est supérieure ou égale au seuil de courant (par exemple le courant maximal), l'amplitude de tension est supérieure ou égale au seuil de tension (par exemple la tension maximale), et la vitesse de rotation du rotor est inférieure à la vitesse de rotation de maintien de puissance maximale de ladite machine électrique,
- Une quatrième zone de fonctionnement, pour laquelle l'amplitude de courant est inférieure au seuil de courant et l'amplitude de tension est supérieure au seuil de tension,
- Une éventuelle cinquième zone de fonctionnement pour laquelle l'amplitude de courant est supérieure ou égale au seuil de courant (par exemple le courant optimal pour obtenir le couple maximal), l'amplitude de tension est supérieure ou égale au seuil de tension (par exemple la tension maximale), et la vitesse de rotation du rotor est supérieure à la vitesse de rotation de maintien de puissance maximale de la machine électrique.

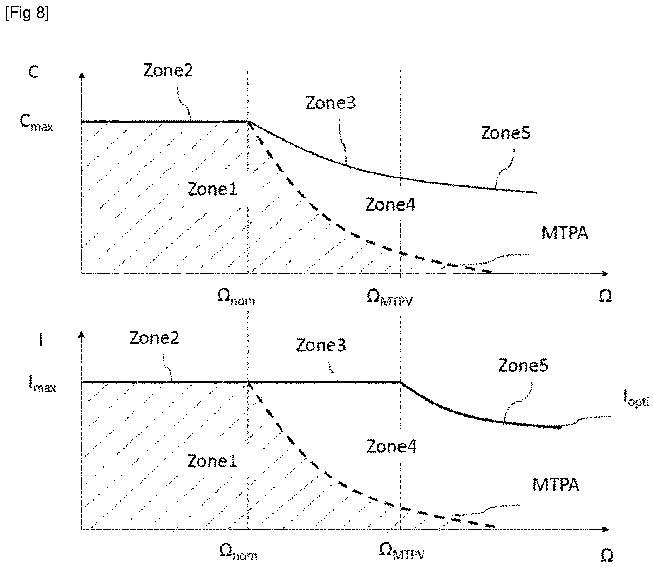

La figure 8 illustre, schématiquement et de manière non limitative, les cinq zones listées ci-dessus. Sur cette figure, on représente deux courbes de la machine électrique, le couple C, l'amplitude de courant I en fonction de la vitesse de rotation du rotor $\Omega$. Sur ces graphes, on représente en outre une courbe nommée MTPA représentée en pointillée, représentative du seuil de tension (tension maximale), qui dépend de la charge.

La première zone, appelée zone 1 (zone hachurée), correspond à une zone pour laquelle le courant I est inférieur au courant maximal Imax, et la tension est inférieure à la tension maximale. La deuxième zone, appelée zone 2 (portion de courbe), correspond à une zone pour laquelle le courant I est supérieur ou égal au courant maximal Imax, et la tension V est inférieure à la tension maximale Vmax. La troisième zone, appelée zone 3 (portion de courbe), correspond à une zone pour laquelle le courant I est supérieur ou égal au courant maximal Imax, et la tension V est supérieure ou égale à la tension maximale Vmax, et la vitesse de rotation $\Omega$ est inférieure à la vitesse de rotation de maintien de puissance maximale notée $\Omega p,max$. La quatrième zone, appelée zone 4 (zone non hachurée sous les courbes), correspond à une zone pour laquelle, la tension V est supérieure à la tension maximale Vmax et l'amplitude de courant est inférieur au seuil de courant Imax. La cinquième zone, appelée zone 5 (zone de défluxage - portion de courbe), correspond à une zone pour laquelle le courant I est supérieur ou égal au courant optimal noté Iopti qui est le courant maximal de défluxage, et la tension V est supérieure ou égale à la tension maximale Vmax, et la vitesse de rotation $\Omega$ est supérieure ou égale à la vitesse de rotation de maintien de puissance maximale $\Omega p,max$.

On remarque que ces zones permettent bien de distinguer les différentes zones dans lesquelles le fonctionnement de la machine diffère en raison des contraintes de fonctionnement : au moins une des courbes du couple, de l'amplitude de tension, ou de l'amplitude de courant se comporte différemment au passage d'une zone à une zone adjacente.

Pour l'étape d'identification de la zone de fonctionnement de la machine électrique, on détermine les variables de fonctionnement de la machine électrique ainsi que la consigne de couple, on en déduit la zone de fonctionnement de la machine électrique. En d'autres termes, on compare les variables de fonctionnement de la machine électrique et la consigne de couple aux seuils définis de ces variables de fonctionnement pour en déduire, en temps réel, la zone de fonctionnement (c'est-à-dire la zone de fonctionnement actuelle de la machine électrique).

Pour l'exemple de la figure 8, si à un instant on détermine que l'amplitude de la tension est inférieure au seuil de tension, et que l'amplitude de courant est supérieure au seuil de courant, alors on considère pour cet instant que la machine est dans la deuxième zone de fonctionnement, zone 2. Et ainsi, on applique alors le système d'équations qui correspond à cette zone pour déterminer les consignes de courant.

On construit un modèle dynamique de la machine électrique, qui relie le couple de la machine électrique aux courants de la machine électrique. Plusieurs modèles dynamiques de la machine électrique peuvent être considérés.

Selon un mode de réalisation, on peut construire le modèle dynamique de la machine

$$\begin{cases} \dfrac{di_d}{dt} = -\dfrac{R_s}{L_d}i_d + \dfrac{L_q}{L_d}\omega\, i_q + \dfrac{1}{L_d}\,v_d \\[2mm] \dfrac{di_q}{dt} = -\dfrac{R_s}{L_q}i_q - \dfrac{L_d}{L_q}\omega i_d + \dfrac{1}{L_q}\,v_q - \dfrac{\phi}{L_q}\,\omega \end{cases}$$

électrique au moyen des équations suivantes : et

$$C_{em} = \tfrac{3}{2}P(\phi_d i_q - \phi_q i_d)$$

avec $i_d$, $i_q$ : les composantes directe et en quadrature du courant de stator de ladite machine électrique, $v_d$, $v_q$ ; les composantes directe et en quadrature de la tension du stator de ladite machine électrique, $\phi$ le flux des aimants du rotor de ladite machine électrique avec $\phi_d$ le flux direct, et $\phi_q$ le flux en quadrature, we la pulsation électrique ($\omega e = P\Omega$), $R_s$ la résistance de stator, $L_d$ l'inductance directe de ladite machine électrique, $L_q$ l'inductance en quadrature de ladite machine électrique, $C_{em}$ le couple de la machine électrique, P est le nombre de paires de pôles de ladite machine électrique. Ce modèle permet de prendre en compte les variations de l'inductance de la machine électrique, qui peuvent varier notamment en fonction des courants direct et en quadrature. De plus, un tel modèle permet de prendre en compte la conception de la machine et son évolution thermique en tenant compte notamment de la résistance du stator et du flux des aimants du rotor, qui peuvent dépendre de leurs températures respectives.

Dans ces équations, les inductances directe et en quadrature peuvent dépendre des courants direct et en quadrature. Ce mode de réalisation est particulièrement adapté aux machines synchro-réluctantes assistées d'aimants permanents.

Pour une autre mise en œuvre de ce mode de réalisation, et pour la simplicité de modélisation pour le calcul optimal du courant de stator, on peut considérer, que seule l'inductance $L_q$ dépend du courant $i_q$ ($L_d$ est alors considéré comme constant et l'inductance mutuelle est négligée). Donc, les composantes directe et en quadrature de flux peuvent être notées respectivement $\phi_d = L_d i_d + \phi$ et $\phi_q = L_q(i_q)i_q$. Pour cette variante de réalisation, on peut écrire le modèle dynamique simplifié au moyen de l'équation :

$$C_{em} = \frac{3}{2}P(\phi i_q + (L_d - L_q(i_q))i_d i_q)$$

En outre, on peut définir l'amplitude de tension au moyen de l'équation suivante :

$$v_{mod} = \sqrt{v_d^2 + v_q^2} = \sqrt{(-\omega L_q(i_q)i_q + R_s i_d)^2 + (\omega(\phi + L_d i_d) + R_s i_q)^2}$$

avec $v_{mod}$ l'amplitude de tension, $v_d$ la tension directe, $v_q$ la tension en quadrature.

Ainsi, au moyen du modèle dynamique, on peut formuler un système d'équations pour chaque zone de fonctionnement.

On peut déterminer la consigne de couple de la machine électrique de manière classique à partir d'une demande de l'utilisateur de la machine électrique. Alternativement, la consigne de couple peut être déterminée par une régulation de vitesse.

Pour une utilisation plus globale en fonction de la complexité de machine électrique utilisée, le procédé selon l'invention met en œuvre une solution récursive, de préférence une solution récursive de deux systèmes d'optimisation avec des contraintes inter-lacées en fonction du courant, de la tension et de la vitesse de la machine électrique, et intégrant les variations des inductances en fonction des composantes de courant du stator. Dans ce sens, les deux systèmes d'optimisation peuvent être obtenus en construisant deux fonctions de Lagrange intégrant les différentes contraintes considérées pour cette méthode.

Pour l'étape de détermination des consignes de courant, on met en œuvre un algorithme récursif avec un seul pas de temps de calcul. Un algorithme récursif est un algorithme qui résout un problème en calculant des solutions d'instance plus petites du même problème. Cet algorithme est dit récursif, car les consignes de courant à l'instant k ($t_k$ en temps discret) dépend des consignes du courant à l'instant k-1 (c'est-à-dire l'instant $t_{k-1}$ discret précédent). Cet algorithme a pour but de résoudre le problème de minimisation issu du système d'équations de la zone de fonctionnement déterminé, et permet ainsi un niveau optimal de performance de la machine électrique. L'algorithme récursif utilise de préférence uniquement la valeur du pas de temps précédent. Cet algorithme récursif présente également l'avantage de n'utiliser aucune table de données ou cartographie pour déterminer les consignes de courant. De plus, cet algorithme associé à la correction permet une utilisation optimale de la tension de bus continue DC, même pour modèles de calcul de consignes de courant optimales imparfaits.

Plusieurs méthodes peuvent être mises en œuvre pour la résolution des systèmes d'équations.

Selon un mode de réalisation de l'invention, on peut mettre en œuvre une résolution d'équations de Lagrange du système d'équation et mettre en œuvre une méthode de Newton-Raphson au premier ordre. Ainsi, on peut écrire :

$$X_{y,k} = X_{y,k-1} - J_{y,k-1}^{-1} \nabla L_{y,k-1}$$

avec X un vecteur contenant les consignes de courants optimales des équations de Lagrange des zones de fonctionnement, k l'incrément de temps, l'indice y représente les zones de fonctionnement, $\nabla L_{y,k-1}$ le gradient des équations de Lagrange à l'instant précédent$_{k-1}$, $J_{y,k-1}$ la matrice Jacobienne à l'instant précédent $t_{k-1}$.

On pose un premier système d'optimisation du courant, appelé Sys1, pendant lequel la consigne de couple peut être réalisée, de la manière suivante :

$$\begin{cases} \min_{i_d, i_q} \quad \frac{1}{2}(i_d^2 + i_q^2) \\ C_{em}^* = \frac{3}{2}P(\phi + (L_d(i_q) - L_q(i_d, i_q))i_d)i_q \\ \sqrt{i_d^2 + i_q^2} \leq I_{smax} \\ \sqrt{(-\omega L_q(i_d, i_q)i_q + R_s i_d)^2 + (\omega(\phi + L_d(i_q)i_d) + R_s i_q)^2} \leq V_{smax} \end{cases}$$

On pose un deuxième système d'optimisation du courant, appelé Sys2, pendant lequel la consigne de couple ne peut pas être réalisée, de la manière suivante :

$$\begin{cases} \min_{i_d, i_q} \quad \frac{1}{2}(C_{em}^* - \frac{3}{2}P(\phi + (L_d - L_q(i_q))i_d)i_q)^2 \\ \sqrt{i_d^2 + i_q^2} \leq I_{s\,max} \\ \sqrt{(-\omega L_q(i_q)i_q + R_s i_d)^2 + (\omega(\phi + L_d i_d) - R_s i_q)^2} \leq V_{s\,max} \end{cases}$$

En minimisant la perte totale sous une contrainte d'égalité sur le couple et une autre d'inégalité sur la tension, on peut écrire le Lagrangien du premier système Sys1 par :

$$
\begin{cases}
Lag_1 = \dfrac{1}{2}(i_d^2 + i_q^2) + \lambda_{Cem}(C_{em}^* - C_{em}) + \lambda_{v\,max}(V_{s\,max} - V_{mod}) \\[2ex]
C_{em} = \dfrac{3}{2}P(\phi + (L_d(i_d, i_q) - L_q(i_d, i_q))i_d)i_q \\[2ex]
V_{mod} = \sqrt{(-\omega L_q(i_d, i_q)i_q + R_s i_d)^2 + (\omega(\phi + L_d(i_d, i_q)i_d) + R_s i_q)^2}
\end{cases}
$$

$C_{em}$ et $C_{em}^*$   sont, respectivement, le couple électromagnétique et sa consigne, $V_{mod}$ est l'amplitude de la tension, $\lambda_{Cem}$ est le facteur de Lagrange de couple électromagnétique désiré et $\lambda_{vmax}$ est le facteur de Lagrange de tension maximale du système Sys1.

Puis, on peut déterminer analytiquement le gradient de ce Lagrangien :

$$
\nabla Lag_1 = \begin{bmatrix} \dfrac{\partial Lag_1}{\partial i_d} & \dfrac{\partial Lag_1}{\partial i_q} & \dfrac{\partial Lag_1}{\partial \lambda_{Cem}} & \dfrac{\partial Lag_1}{\partial \lambda_{v\,max}} \end{bmatrix}^T =
$$

$$
\begin{bmatrix} dLag_1 & dLag_2 & dLag_3 & dLag_4 \end{bmatrix}^T
$$

On peut calculer la matrice Jacobienne par différence finie :

$$
J_{Sys1} = \begin{bmatrix}
\dfrac{dLag_1 - dLag_{1i_d}}{di_d} & \dfrac{dLag_1 - dLag_{1i_q}}{di_q} & \dfrac{dLag_1 - dLag_{1\lambda_{Cem}}}{d\lambda_{Cem}} & \dfrac{dLag_1 - dLag_{1\lambda_{v\,max}}}{d\lambda_{v\,max}} \\[2ex]
\dfrac{dLag_2 - dLag_{2i_d}}{di_d} & \dfrac{dLag_2 - dLag_{2i_q}}{di_q} & . & . \\[2ex]
\dfrac{dLag_3 - dLag_{3i_d}}{di_d} & . & . & . \\[2ex]
\dfrac{dLag_4 - dLag_{4i_d}}{di_d} & . & . & \dfrac{dLag_4 - dLag_{4\lambda_{v\,max}}}{d\lambda_{v\,max}}
\end{bmatrix}
$$

Avec

$$
dLag_{1\ldots 4i_d} = dLag_{1\ldots 4}(i_d + di_d, i_q, \lambda_{Cem}, \lambda_{v\,max})
$$

$$
dLag_{1\ldots 4i_q} = dLag_{1\ldots 4}(i_d, i_q + di_q, \lambda_{Cem}, \lambda_{v\,max})
$$

$$
dLag_{1\ldots 4\lambda_{Cem}} = dLag_{1\ldots 4}(i_d, i_q, \lambda_{Cem} + d\lambda_{Cem}, \lambda_{v\,max})
$$

$$
dLag_{1\ldots 4\lambda_{v\,max}} = dLag_{1\ldots 4}(i_d, i_q, \lambda_{Cem}, \lambda_{v\,max} + d\lambda_{v\,max})
$$

Ainsi, pour le mode de réalisation avec quatre zones de fonctionnement (figure 8), on peut obtenir les consignes de courant pour la zone 1 au moyen de :

$$X_{11,k} = X_{11,k-1} - (J_{Sys1\_1})^{-1} \nabla Lag_{11} \text{ avec } X_{11} = \begin{bmatrix} i_d & i_q & \lambda_{Cem} \end{bmatrix}^T$$

Et pour la zone 4 au moyen de :

$$X_{1,k} = X_{1,k-1} - (J_{Sys1})^{-1} \nabla Lag_1 \text{ avec } X_{12} = \begin{bmatrix} i_d & i_q & \lambda_{Cem} & \lambda_{v\max} \end{bmatrix}^T$$

Avec $J_{sys1\_1}$ une matrice (3x3) sélectionnée de la matrice $J_{sys1}$ en fonction du vecteur $X_{11}$.

En minimisant l'écart sur le couple électromagnétique sous une contrainte d'inégalité sur la tension et une autre d'inégalité sur le courant, on peut écrire le Lagrangien du deuxième système Sys2 par :

$$\begin{cases} Lag_2 = (C_{em}^* - \dfrac{3}{2} P(\phi + (L_d(i_d, i_q) - L_q(i_d, i_q))i_d)i_q) + \gamma_{v\max}(V_{mod} - V_{s\max}) + \gamma_{i\max}(I_{mod} - I_{s\max}) \\ I_{mod} = \sqrt{i_d^2 + i_q^2} \\ V_{mod} = \sqrt{(-\omega L_q(i_d, i_q)i_q + R_s i_d)^2 + (\omega(\phi + L_d(i_d, i_q)_d) + R_s i_q)^2} \end{cases}$$

$C_{em}^*$ est la consigne de couple électromagnétique, $V_{mod}$ est l'amplitude de la tension, $\gamma_{imax}$ est le facteur de Lagrange de courant maximal et $\gamma_{vmax}$ est le facteur de Lagrange de tension maximale du système Sys2.

Puis, on peut déterminer analytiquement le gradient de ce Lagrangien :

$$\nabla Lag_2 = \begin{bmatrix} \dfrac{\partial Lag_2}{\partial i_d} & \dfrac{\partial Lag_2}{\partial i_q} & \dfrac{\partial Lag_2}{\partial \gamma_{v\max}} & \dfrac{\partial Lag_2}{\partial \gamma_{i\max}} \end{bmatrix}^T =$$
$$\begin{bmatrix} dLag_{21} & dLag_{22} & dLag_{23} & dLag_{24} \end{bmatrix}^T$$

On peut calculer la matrice Jacobienne par différence finie :

$$J_{Sys2} = \begin{bmatrix} \dfrac{dLag_{21} - dLag_{21i_d}}{di_d} & \dfrac{dLag_{21} - dLag_{21i_q}}{di_q} & \dfrac{dLag_{21} - dLag_{21\gamma_{v\max}}}{d\gamma_{v\max}} & \dfrac{dLag_{21} - dLag_{21\gamma_{i\max}}}{d\gamma_{i\max}} \\ \dfrac{dLag_{22} - dLag_{22i_d}}{di_d} & \dfrac{dLag_{22} - dLag_{22i_q}}{di_q} & \cdot & \cdot \\ \dfrac{dLag_{23} - dLag_{23i_d}}{di_d} & \cdot & \cdot & \cdot \\ \dfrac{dLag_{24} - dLag_{24i_d}}{di_d} & \cdot & \cdot & \dfrac{dLag_{24} - dLag_{24\gamma_{i\max}}}{d\gamma_{i\max}} \end{bmatrix}$$

Avec

$$dLag_{21\ldots4i_d} = dLag_{21\ldots4}(i_d + di_d, i_q, \gamma_{v\max}, \gamma_{i\max})$$

$$dLag_{21\ldots4i_q} = dLag_{21\ldots4}(i_d, i_q + di_q, \gamma_{v\max}, \gamma_{i\max})$$

$$dLag_{21...4_{\lambda_{vmax}}} = dLag_{21...4}(i_d, i_q, \gamma_{vmax} + d\gamma_{vmax}, \gamma_{imax})$$

$$dLag_{21...4_{\lambda_{imax}}} = dLag_{21...4}(i_d, i_q, \gamma_{vmax}, \gamma_{imax} + d\gamma_{imax})$$

Ainsi, pour le mode de réalisation avec quatre zones de fonctionnement (figure 8), on peut obtenir les consignes de courant pour la zone 2 au moyen de :

$$X_{21,k} = X_{21,k-1} - (J_{Sys2\_1})^{-1}\nabla Lag_{21} \quad \text{avec} \quad X_{21} = \begin{bmatrix} i_d & i_q & \gamma_{imax} \end{bmatrix}^T$$

Pour la zone 3 au moyen de :

$$X_{2,k} = X_{2,k-1} - (J_{Sys2})^{-1}\nabla Lag_{2} \quad \text{avec} \quad X_{2} = \begin{bmatrix} i_d & i_q & \gamma_{vmax} & \gamma_{imax} \end{bmatrix}^T$$

Pour la zone 5 au moyen de :

$$X_{2,k} = X_{2,k-1} - (J_{Sys2\_2})^{-1}\nabla Lag_{22} \quad \text{avec} \quad X_{22} = \begin{bmatrix} i_d & i_q & \gamma_{vmax} \end{bmatrix}^T$$

Avec $J_{sys2\_1}$ et $J_{sys2\_2}$ des matrices (3x3) sélectionnées de la matrice $J_{sys2}$ en fonction du vecteur $X_{21}$ et $X_{22}$.

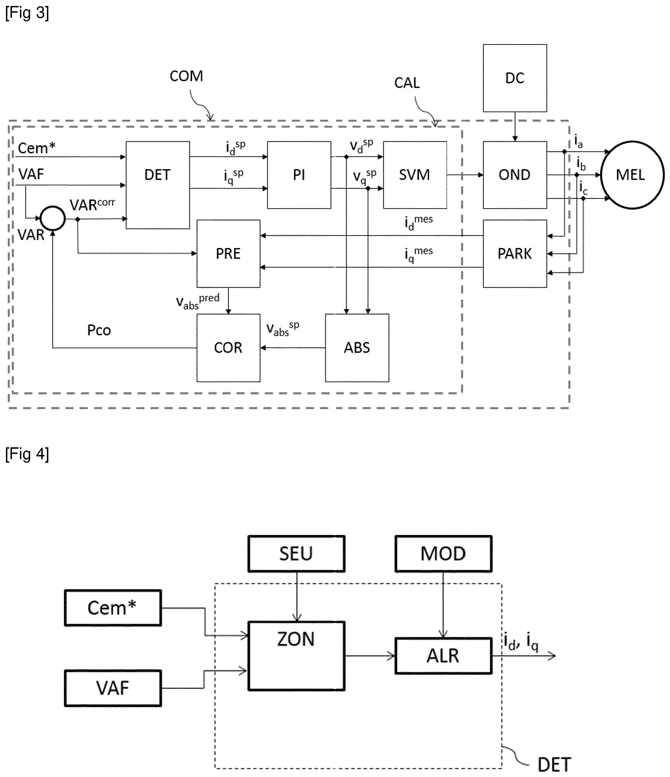

La figure 4 illustre, schématiquement et de manière non limitative les étapes de détermination des consignes de courant selon une mise en œuvre de l'invention. Dans un premier temps, on détermine, en temps réel, une consigne de couple de machine électrique Cem*, et on acquiert au moins une variable de fonctionnement VAF de la machine électrique. Puis, au moyen de zones de fonctionnement identifiées par l'intermédiaire de seuils SEU définis, on détermine, en temps réel, une zone de fonctionnement ZON de la machine électrique, en fonction de la consigne de couple Cem et de l'au moins une variable de fonctionnement VAF. Préalablement, un modèle dynamique MOD de la machine électrique a été construit. En temps réel, on met en œuvre un algorithme récursif ALR qui utilise le modèle dynamique MOD et la zone de fonctionnement identifiée ZON pour déterminer des consignes de courant $i_d$, $i_q$. L'algorithme récursif ALR dépend notamment de la consigne de couple, des variables de fonctionnement, parmi lesquelles la variable de fonctionnement corrigée. Les étapes en temps réel qui permettent de déterminer les consignes de courant $i_d$, $i_q$ sont notées DET (et correspondent à l'étape DET des figures 2, 3, et 5 à 7 qui sont décrites ci-dessous).

Conformément à une mise en œuvre de l'invention, on peut déterminer la prédiction de la tension absolue au moyen des consignes de courant par un estimateur. Alternativement, on peut déterminer la prédiction de tension absolue au moyen des mesures des courants dans les phases par un estimateur.

De plus, l'estimateur mis en œuvre dans ces alternatives peut dépendre de la valeur corrigée de la variable de fonctionnement au moyen du paramètre de correction, ou du paramètre de correction et de la variable de fonctionnement. Ainsi, l'estimateur peut être fidèle aux différentes étapes permettant de déterminer le contrôle de l'onduleur.

Selon un exemple de réalisation, l'estimateur peut être construit au moyen d'au moins une cartographie de flux non linéaire.

De manière classique, on peut déterminer les consignes de tension au moyen d'au moins un régulateur proportionnel intégral, noté régulateur PI dans la suite de la description. Un tel régulateur PI génère les consignes de tension en fonction des consignes de courant. Selon un mode de réalisation, le procédé de commande peut mettre en œuvre un premier régulateur PI pour la consigne de tension « directe », et un deuxième régulateur PI pour la consigne de tension « en quadrature ». Pour cette réalisation, le régulateur PI peut prendre en compte également les courants mesurés dans les phases de la machine électrique.

En variante, toute méthode analogue peut être mise en œuvre pour la détermination des consignes de tension.

Selon un aspect de l'invention, on peut déterminer le paramètre de correction en mettant en œuvre les étapes suivantes :

- On détermine la prédiction de tension absolue, notée $V_{abs}^{pred}$, par exemple au moyen du modèle utilisé dans l'algorithme récursif,
- On détermine les consignes de tension, $V_d^{sp}$ et $V_q^{sp}$ étant respectivement les consignes de tension directe et en quadrature,

- On calcule une tension absolue de consigne, par exemple au moyen de la formule $V_{abs}^{sp} = \sqrt{V_d^{sp\,2} + V_q^{sp\,2}}$ ou au moyen de toute formule analogue,

- On compare la prédiction de tension absolue $V_{abs}^{pred}$ et ladite tension absolue de consigne $V_{abs}^{sp}$, et

- On en déduit le paramètre de correction à partir de la comparaison.

Puis, on corrige une des variables de fonctionnement au moyen du paramètre de correction.

Selon une option de l'invention, le paramètre de correction peut être un paramètre multiplicatif (un gain), ou un paramètre additif (un offset également appelé écart), ou un écart entre la valeur de prédiction de tension absolue et la tension absolue de consigne. Lorsque le paramètre de correction est un gain, alors la valeur de commande corrigée peut correspondre au produit de la variable de fonctionnement par le gain. Lorsque le paramètre de correction est une valeur corrigée d'une variable de la machine électrique, alors la valeur de commande corrigée peut être obtenue par toute opération mathématique entre la variable de fonctionnement et la valeur corrigée d'une variable de la machine.

Selon un mode de réalisation, le calcul du paramètre de correction Pco peut être réalisé par un étage de régulation, par exemple de type Proportionnel Intégral.

Conformément à un mode de réalisation de l'invention, on peut déterminer le signal de commande de commutation de l'onduleur au moyen des consignes de tensions et d'un contrôle vectoriel, notamment un contrôle classique du vecteur spatial SVM (de l'anglais « Space Vector Modulation »), ou toute méthode analogue. Le signal de commande déterminé correspond aux signaux de commande envoyés aux commutations des bras de commutation de l'onduleur permettant de transformer le signal du bus continu en signaux alternatifs.

Ainsi, on peut déterminer le signal de commande de commutation de l'onduleur au moyen des consignes de tension au moyen des deux étapes suivantes :

- Détermination des consignes de tension à partir des consignes de courant, par exemple au moyen d'au moins un régulateur PI, et
- Détermination des signaux de commande de commutation à partir des consignes de tension, par exemple au moyen d'un contrôle vectoriel de type SVM.

Pour le mode de réalisation, pour lequel une variable de fonctionnement de la machine électrique est la vitesse de rotation électrique, on peut estimer ou mesurer cette vitesse. Dans le cas de la mesure, elle peut être mise en œuvre par la mesure de la vitesse de rotation mécanique du rotor au moyen d'un capteur (notamment un capteur de position ou vitesse angulaire du rotor), et par multiplication de la mesure de la vitesse de rotation mécanique par le nombre de paires de pôles de la machine électrique. Alternativement, la position électrique peut être déterminée directement par un capteur de rotation. Dans le cas de l'estimation de la vitesse de rotation électrique, on peut mettre en œuvre l'une quelconque des méthodes d'estimation sans capteur classiques (de l'anglais « sensorless »).

Le système de commande selon l'invention comprend un onduleur, éventuellement un capteur de position et/ou de vitesse du rotor de la machine électrique, et un calculateur et une mémoire configurés pour mettre en œuvre les étapes du procédé de commande selon l'une quelconque des variantes ou des combinaisons de variantes décrites précédemment. En outre, le système de commande peut comporter des moyens de mesure des courants (non représentés) dans les phases de la machine électrique, par exemple des capteurs de courant.

Selon un mode de réalisation de l'invention, la machine électrique tournante peut être une machine électrique synchrone, de préférence une machine électrique synchro-réluctante assistée d'aimants permanents. En effet, le procédé et le système selon l'invention sont particulièrement adaptés à ce type de machine électrique, notamment car l'invention permet de prendre en compte les contraintes et le fonctionnement de tous types de machines.

La figure 2 illustre, schématiquement et de manière non limitative, les étapes du procédé selon un premier mode de réalisation de l'invention. Les éléments identiques à la figure 1 ne sont pas décrits une deuxième fois. Par conséquent, seul le calculateur CAL est détaillé.

Le procédé de commande mis en œuvre par le calculateur CAL comporte dans un premier temps une étape de détermination des consignes de courants $i_d^{sp}$ et $i_q^{sp}$ à partir de la consigne de couple Cem*, et de variables de fonctionnement VAF, parmi lesquelles la variable de fonctionnement corrigée VAR$^{corr}$. Sur la figure, une seule flèche est représentée pour les variables de fonctionnement VAF pour un souci de simplification de la figure. Toutefois cette flèche correspond bien à une pluralité de variables de fonctionnement VAF. Cette étape de détermination des consignes de courants est mise en œuvre au moyen d'au moins un algorithme récursif DET (notamment tel qu'illustré en figure 4).

Au moins un régulateur PI (de préférence deux régulateurs PI ou toute méthode analogue) est mis en œuvre pour déterminer les consignes de tension $V_d^{sp}$ et $V_q^{sp}$ à partir des consignes de courants $i_d^{sp}$ et $i_q^{sp}$.

Les consignes de tension V$_d$$^{sp}$ et V$_q$$^{sp}$ sont converties en signal de commande de commutation pour l'onduleur OND au moyen d'un contrôle de vecteur spatial SVM, ou toute méthode analogue.

En outre, le procédé de commande comporte une étape COR de détermination du paramètre de correction Pco. Cette correction est mise en œuvre à partir d'une tension absolue de consigne $V_{abs}^{sp}$ qui est obtenue directement depuis les consignes de tension V$_d$$^{sp}$ et V$_q$$^{sp}$ et à partir d'une tension absolue prédite $V_{abs}^{pred}$ qui est obtenue par une étape de prédiction PRE (ou estimation) sur la base des consignes de tension i$_d$$^{sp}$ et i$_q$$^{sp}$. Tel qu'illustré, l'étape de prédiction PRE peut également prendre en compte la variable de fonctionnement corrigée VAR$^{corr}$.

Ce facteur de correction Pco corrige une variable de fonctionnement VAR en entrée du procédé de commande, de manière à déterminer la variable de fonctionnement corrigée VAR$^{corr}$ utilisée dans le modèle de contrôle MCO, formant ainsi une boucle de retour.

La figure 3 illustre, schématiquement et de manière non limitative, les étapes du procédé selon un deuxième mode de réalisation de l'invention. Les éléments identiques à la figure 2 ne sont pas décrits une deuxième fois.

Pour ce mode de réalisation, la tension absolue prédite $V_{abs}^{pred}$ est obtenue par une étape de prédiction PRE (ou estimation) sur la base des mesures de tension i$_d$$^{mes}$ et i$_q$$^{mes}$. Les mesures de tension i$_d$$^{mes}$ et i$_q$$^{mes}$ sont obtenues en appliquant une transformation de PARK aux intensités i$_a$, i$_b$, i$_c$ mesurées par un capteur de courant dans les phases notées a, b et c de la machine électrique. Une telle transformation de PARK peut être réalisée en appliquant une relation du type :

$$\begin{pmatrix} i_d \\ i_q \end{pmatrix} = \begin{pmatrix} \cos\theta_e & \cos\left(\theta_e - \dfrac{2\pi}{3}\right) & \cos\left(\theta_e + \dfrac{2\pi}{3}\right) \\ -\sin\theta_e & -\sin\left(\theta_e - \dfrac{2\pi}{3}\right) & -\sin\left(\theta_e + \dfrac{2\pi}{3}\right) \end{pmatrix} \begin{pmatrix} i_A \\ i_B \\ i_C \end{pmatrix} \quad (1)$$

Avec θe la position angulaire électrique du rotor par rapport au stator de la machine électrique (pour rappel la position angulaire électrique correspond à la multiplication de la position angulaire mécanique du rotor par rapport au stator de la machine électrique et du nombre de paires de pôles de la machine électrique).

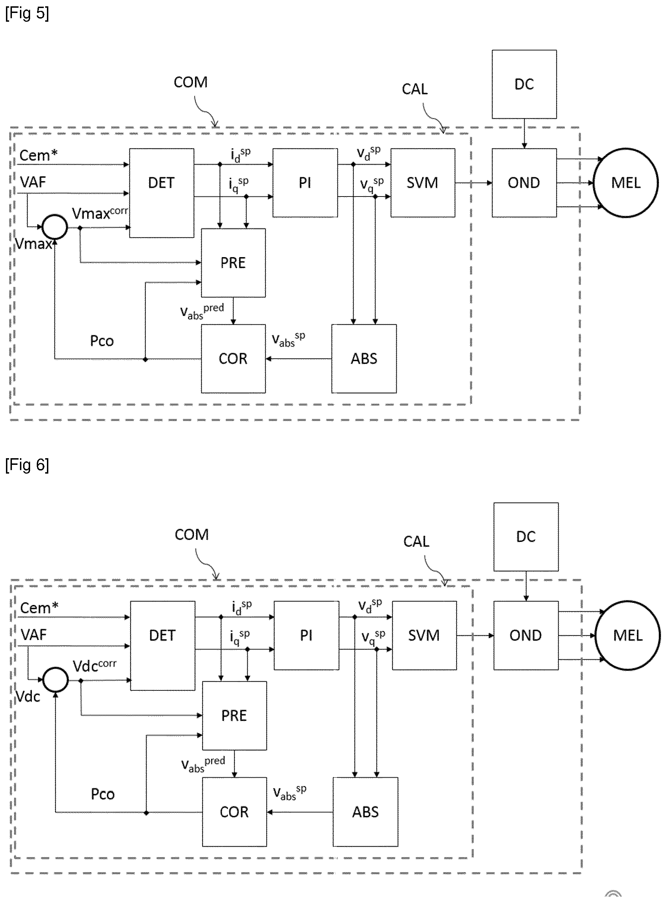

La figure 5 illustre, schématiquement et de manière non limitative, les étapes du procédé selon un troisième mode de réalisation de l'invention. Les éléments identiques au mode de réalisation de la figure 2 ne sont pas décrits une deuxième fois.

Pour ce mode de réalisation, la variable de fonctionnement corrigée est la norme de la tension de commande maximale Vmax, formant ainsi une valeur corrigée Vmax$^{corr}$. Cette norme de la tension de commande maximale Vmax peut être définie par : $V_{max} = V_{dc} \times M$ avec Vdc la tension de bus continue et M un indice de modulation.

De plus, pour ce mode de réalisation, la prédiction PRE peut dépendre également ou alternativement du paramètre de correction Pco.

Ce mode de réalisation peut également être associé au mode de réalisation de la figure 3.

La figure 6 illustre, schématiquement et de manière non limitative, les étapes du procédé selon un quatrième mode de réalisation de l'invention. Les éléments identiques au mode de réalisation de la figure 2 ne sont pas décrits une deuxième fois.

Pour ce mode de réalisation, la variable de fonctionnement corrigée est la tension de bus continue Vdc, formant ainsi une valeur corrigée Vdc$^{corr}$.

De plus, pour ce mode de réalisation, la prédiction PRE peut dépendre également ou alternativement du paramètre de correction Pco.

Ce mode de réalisation peut également être associé au mode de réalisation de la figure 3.

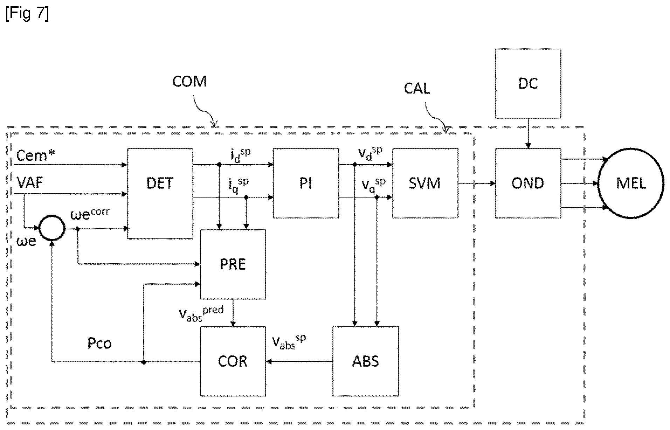

La figure 7 illustre, schématiquement et de manière non limitative, les étapes du procédé selon un cinquième mode de réalisation de l'invention. Les éléments identiques au mode de réalisation de la figure 2 ne sont pas décrits une deuxième fois.

Pour ce mode de réalisation, la variable de fonctionnement corrigée est la vitesse de rotation électrique ωe du rotor de la machine électrique, formant ainsi une valeur corrigée ωe$^{corr}$.

De plus, pour ce mode de réalisation, la prédiction PRE peut dépendre également ou alternativement du paramètre de correction Pco.

Ce mode de réalisation peut également être associé au mode de réalisation de la figure 3.

**Revendications**

1. Procédé de commande d'une machine électrique (MEL) pilotée par un onduleur (OND) pourvu de plusieurs bras de commutation, dans lequel on met en œuvre les étapes suivantes :

> a. On acquiert une consigne de couple (Cem*) de ladite machine électrique (MEL) ;
> b. On acquiert une consigne ou une mesure d'une pluralité de variables de fonctionnement (VAF) de ladite machine électrique (MEL) ;

ledit procédé étant **caractérisé en ce que** on met en œuvre au moins les étapes suivantes:

> c. On détermine un paramètre de correction (Pco) d'une desdites variables de fonctionnement (VAF) en fonction d'une prédiction de tension absolue dépendante de courants dans les phases de ladite machine électrique et en fonction de consignes de tension ;
> d. On identifie une zone de fonctionnement (ZON) de ladite machine électrique (MEL) en fonction de ladite consigne de couple et desdites variables de fonctionnement de ladite machine électrique, une desdites variables de fonctionnement étant corrigée au moyen dudit paramètre de correction.
> e. On détermine (DET) des consignes de courant de ladite machine électrique en fonction de ladite consigne de couple acquise (Cem*), desdites variables de fonctionnement acquise (VAF), une desdites variables de fonctionnement étant corrigée (VAR$^{corr}$) au moyen dudit paramètre de correction (Pco), et au moyen d'un algorithme récursif (ALR) qui résout un système d'équations qui dépend de ladite zone de fonctionnement identifiée et d'un modèle dynamique (MOD) de ladite machine électrique, ledit modèle dynamique (MOD) de ladite machine électrique reliant notamment le couple de la machine électrique aux courants de ladite machine électrique ;
> f. On détermine un signal de commande de commutation dudit onduleur (OND) au moyen desdites consignes de courant ; et
> g. On commande ledit onduleur (OND) au moyen dudit signal de commande de commutation.

2. Procédé de commande selon la revendication 1, dans lequel on définit préalablement au moins deux zones de fonctionnement (ZON) de ladite machine électrique délimitées par un seuil prédéfini (SEU) pour au moins une variable de fonctionnement (VAF), de préférence on prédéfinit ledit seuil (SEU) en fonction d'une contrainte d'utilisation de ladite machine électrique, tel qu'un maximum ou un minimum de ladite variable de fonctionnement considérée.

3. Procédé de commande selon l'une des revendications précédentes, dans lequel ladite au moins une variable de fonctionnement (VAF) est choisie parmi l'amplitude de tension de ladite machine électrique, l'amplitude de courant de ladite machine électrique, la vitesse de rotation du rotor de ladite machine électrique, une température de la machine électrique.

4. Procédé de commande selon la revendication 3, dans lequel on définit les zones de fonctionnement suivantes :

> • Une première zone de fonctionnement (zone1) pour laquelle l'amplitude de courant est inférieure à un seuil de courant, et l'amplitude de tension est inférieure à un seuil de tension,
> • Une deuxième zone de fonctionnement (zone2) pour laquelle l'amplitude de courant est supérieure ou égale audit seuil de courant, et l'amplitude de tension est inférieure audit seuil de tension,
> • Une troisième zone de fonctionnement (zone3) pour laquelle l'amplitude de courant est supérieure ou égale audit seuil de courant, l'amplitude de tension est supérieure ou égale audit seuil de tension, et la vitesse de rotation du rotor est inférieure à la vitesse de rotation de maintien de puissance maximale de ladite machine électrique,
> • Une quatrième zone de fonctionnement (zone4) pour laquelle l'amplitude de courant est inférieure audit seuil de courant, et l'amplitude de tension est supérieure ou égale audit seuil de tension, et
> • Eventuellement une cinquième zone de fonctionnement (zone5) pour laquelle l'amplitude de courant est supérieure ou égale audit seuil de courant, l'amplitude de tension est supérieure ou égale audit seuil de tension, et la vitesse de rotation du rotor est supérieure à ladite vitesse de rotation de maintien de puissance maximale de ladite machine électrique.

5. Procédé de commande selon l'une des revendications précédentes, dans lequel on construit ledit modèle dynamique (MOD) de ladite machine électrique à partir des équations suivantes :

$$\begin{cases} \dfrac{di_d}{dt} = -\dfrac{R_s}{L_d}i_d + \dfrac{L_q}{L_d}\omega i_q + \dfrac{1}{L_d}v_d \\[3mm] \dfrac{di_q}{dt} = -\dfrac{R_s}{L_q}i_q - \dfrac{L_d}{L_q}\omega i_d + \dfrac{1}{L_q}v_q - \dfrac{\phi}{L_q}\omega \end{cases}$$

et

$$C_{em} = \tfrac{3}{2}P(\phi_d i_q - \phi_q i_d)$$

avec $i_d$, $i_q$ : les composantes directe et en quadrature du courant de stator de ladite machine électrique, $v_d$, $v_q$ ; les composantes directe et en quadrature de la tension dudit stator de ladite machine électrique, $\phi$ le flux des aimants du rotor de ladite machine électrique avec $\phi$ le flux direct, et $\phi_q$ le flux en quadrature, w la pulsation électrique, $R_s$ la résistance de stator, $L_d$ l'inductance directe de ladite machine électrique, $L_q$ l'inductance en quadrature de ladite machine électrique, $C_{em}$ le couple de la machine électrique, P est le nombre de paires de pôles de ladite machine électrique, de préférence ladite résistance de stator et ledit flux des aimants du rotor de ladite machine électrique sont dépendants de leur températures respectives et/ou de préférence les inductances directe Ld et quadrature Lq sont non constants.

6. Procédé de commande selon l'une des revendications précédentes, dans lequel ledit algorithme récursif (ALR) met en œuvre, en partant d'une valeur initiale ou précédente appropriée, une résolution récursive d'équations de Langrange dudit système d'équation, et s'écrit : $X_{y,k} = X_{y,k-1} - (J_{y,k})^{-1}\nabla L_{y,k}$ avec X un vecteur contenant les consignes de courants optimales et les facteurs des contriantes des équations de Lagrange des zones de fonctionnement, k l'incrément de temps, l'indice y représente lesdites zones de fonctionnement, $\nabla L_{y,k-1}$ le gradient des équations de Lagrange, $J_{y,k-1}$ la matrice Jacobienne.

7. Procédé de commande selon la revendication 6, dans lequel ledit algorithme récursif (ALR) met en oeuvre une méthode de Newton-Raphson au premier ordre pour développer ladite matrice Jacobienne dudit système d'équation.

8. Procédé de commande selon l'une des revendications précédentes, dans lequel on détermine, par un estimateur, ladite prédiction de tension absolue au moyen desdites consignes de courant ($i_d{}^{sp}$, $i_q{}^{sp}$) ou au moyen de mesures desdits courants ($i_d{}^{mes}$, $i_q{}^{mes}$) dans les phases de ladite machine électrique (MEL).

9. Procédé de commande selon l'une des revendications précédentes, dans lequel on détermine lesdites consignes de tension ($V_d{}^{sp}$, $V_q{}^{sp}$) au moyen d'au moins un régulateur proportionnel intégral (PI) et desdites consignes de courant ($i_d{}^{sp}$, $i_q{}^{sp}$).

10. Procédé de commande selon l'une des revendications 8 ou 9, dans lequel on détermine ledit paramètre de correction (Pco) en mettant en œuvre les étapes suivantes :

    i) On détermine une prédiction de tension absolue ($v_{abs}{}^{pred}$) ;
    ii) On détermine lesdites consignes de tension ($V_d{}^{sp}$, $V_q{}^{sp}$) ;

    iii) On calcule une tension absolue de consigne par la formule : $V_{abs}^{sp} = \sqrt{V_d^{sp\,2} + V_q^{sp\,2}}$ , $V_d{}^{sp}$ et $V_q{}^{sp}$ étant respectivement les consignes de tension directe et en quadrature
    iv) On compare ladite prédiction de tension absolue ($v_{abs}{}^{pred}$) à ladite tension absolue de consigne ($v_{abs}{}^{sp}$) ; et
    v) On en déduit ledit paramètre de correction (Pco) à partir de ladite comparaison.

11. Procédé de commande selon l'une des revendications 9 ou 10, dans lequel on détermine ledit signal de commande au moyen desdites consignes de tension ($V_d{}^{sp}$, $V_q{}^{sp}$) et d'un contrôle vectoriel (SVM).

12. Procédé de commande selon l'une des revendications précédentes, dans lequel ladite variable de fonctionnement corrigée (VAR$^{corr}$) est la vitesse de rotation de ladite machine électrique, la tension de bus continue de l'onduleur ou la norme de La tension de commande maximale de l'onduleur.

**13.** Système de commande d'une machine électrique (MEL) synchrone comprenant un onduleur (OND) pourvu de bras de commutation, un calculateur (CAL) et une mémoire configurée pour mettre en œuvre les étapes du procédé de commande selon l'une des revendications précédentes pour commander ledit onduleur (OND), de préférence ladite machine électrique (MEL) est une machine synchro-réluctante assistée par des aimants permanents ou une machine synchrone à aimants permanents.

**Patentansprüche**

**1.** Verfahren zur Steuerung einer elektrischen Maschine (MEL), die von einem Wechselrichter (OND) angesteuert wird, der mit mehreren Schaltarmen versehen ist, bei dem die folgenden Schritte durchgeführt werden:

a. Erfassen eines Drehmomentsollwerts (Cem*) der elektrischen Maschine (MEL);
b. Erfassen eines Sollwerts oder eines Messwerts einer Mehrzahl von Betriebsvariablen (VAF) der elektrischen Maschine (MEL);

wobei das Verfahren **dadurch gekennzeichnet ist, dass** mindestens die folgenden Schritte durchgeführt werden:

c. Bestimmen eines Korrekturparameters (Pco) einer der Betriebsvariablen (VAF) in Abhängigkeit von einer Vorhersage einer absoluten Spannung, die von Strömen in den Phasen der elektrischen Maschine abhängig ist, und in Abhängigkeit von Spannungssollwerten;
d. Identifizieren eines Betriebsbereichs (ZON) der elektrischen Maschine (MEL) in Abhängigkeit von dem Drehmomentsollwert und von den Betriebsvariablen der elektrischen Maschine, wobei eine der Betriebsvariablen mittels des Korrekturparameters korrigiert wird.
e. Bestimmen (DET) von Stromsollwerten der elektrischen Maschine in Abhängigkeit von dem erfassten Drehmomentsollwert (Cem*), von den erfassten Betriebsvariablen (VAF), wobei eine der Betriebsvariablen mittels des Korrekturparameters (Pco) korrigiert wird (VAR$^{corr}$), und mittels eine rekursiven Algorithmus (ALR), der ein Gleichungssystem löst, das von dem identifizierten Betriebsbereich und von einem dynamischen Modell (MOD) der elektrischen Maschine abhängt, wobei das dynamische Modell (MOD) der elektrischen Maschine insbesondere das Drehmoment der elektrischen Maschine mit den Strömen der elektrischen Maschine verknüpft;
f. Bestimmen eines Schaltsteuersignals des Wechselrichters (OND) mittels der Stromsollwerte; und
g. Steuern des Wechselrichters (OND) mittels des Schaltsteuersignals.

**2.** Verfahren zur Steuerung nach Anspruch 1, bei dem zuvor mindestens zwei Betriebsbereiche (ZON) der elektrischen Maschine definiert werden, die durch einen vorgegebenen Schwellenwert (SEU) für mindestens eine Betriebsvariable (VAF) begrenzt werden, wobei der Schwellenwert (SEU) bevorzugt in Abhängigkeit von einer Nutzungseinschränkung der elektrischen Maschine wie einem Maximum oder einem Minimum der betrachteten Betriebsvariable vorgegeben wird.

**3.** Verfahren zur Steuerung nach einem der vorhergehenden Ansprüche, bei dem die mindestens eine Betriebsvariable (VAF) aus der Spannungsamplitude der elektrischen Maschine, der Stromamplitude der elektrischen Maschine, der Drehzahl des Rotors der elektrischen Maschine, einer Temperatur der elektrischen Maschine gewählt ist.

**4.** Verfahren zur Steuerung nach Anspruch 3, bei dem die folgenden Betriebsbereiche definiert werden:

• Ein erster Betriebsbereich (zone1), bei dem die Stromamplitude kleiner als ein Stromschwellenwert ist und die Spannungsamplitude kleiner als ein Spannungsschwellenwert ist,
• Ein zweiter Betriebsbereich (zone2), bei dem die Stromamplitude größer oder gleich dem Stromschwellenwert ist und die Spannungsamplitude kleiner als der Spannungsschwellenwert ist,
• Ein dritter Betriebsbereich (zone3), bei dem die Stromamplitude größer oder gleich dem Stromschwellenwert ist, die Spannungsamplitude größer oder gleich dem Spannungsschwellenwert ist und die Drehzahl des Rotors geringer als die Drehzahl zum Aufrechterhalten einer maximalen Leistung der elektrischen Maschine ist,
• Ein vierter Betriebsbereich (zone4), bei dem die Stromamplitude kleiner als der Stromschwellenwert ist und die Spannungsamplitude größer oder gleich dem Spannungsschwellenwert ist, und
• Gegebenenfalls ein fünfter Betriebsbereich (zone5), bei dem die Stromamplitude größer oder gleich dem Stromschwellenwert ist, die Spannungsamplitude größer oder gleich dem Spannungsschwellenwert ist und die Drehzahl des Rotors höher als die Drehzahl zum Aufrechterhalten einer maximalen Leistung der elektrischen Maschine ist.

**5.** Verfahren zur Steuerung nach einem der vorhergehenden Ansprüche, wobei das dynamische Modell (MOD) der elektrischen Maschine ausgehend von den folgenden Gleichungen aufgebaut wird:

$$\begin{cases} \dfrac{di_d}{dt} = -\dfrac{R_s}{L_d} i_d + \dfrac{L_q}{L_d} \omega\, i_q + \dfrac{1}{L_d} v_d \\[2mm] \dfrac{di_q}{dt} = -\dfrac{R_s}{L_q} i_q - \dfrac{L_d}{L_q} \omega\, i_d + \dfrac{1}{L_q} v_q - \dfrac{\phi}{L_q} \omega \end{cases}$$

und

$$C_{em} = \tfrac{3}{2} P(\phi_d i_q - \phi_q i_d) \;,$$

wobei $i_d$, $i_q$ die Direkt- und Quadraturkomponenten des Statorstroms der elektrischen Maschine sind, $v_d$, $v_q$ die Direkt- und Quadraturkomponenten der Spannung des Stators der elektrischen Maschine sind, $\Phi$ der Fluss der Magnete des Rotors der elektrischen Maschine ist, wobei $\Phi_d$ der Direktfluss ist und $\Phi_q$ der Quadraturfluss ist, $\omega$ die elektrische Kreisfrequenz ist, $R_s$ der Statorwiderstand ist, $L_d$ die Direktinduktivität der elektrischen Maschine ist, $L_q$ die Quadraturinduktivität der elektrischen Maschine ist, $C_{em}$ das Drehmoment der elektrischen Maschine ist, P die Polpaarzahl der elektrischen Maschine ist, der Statorwiderstand und der Fluss der Magnete des Rotors der elektrischen Maschine bevorzugt von ihren jeweiligen Temperaturen abhängig sind und/oder die Direktinduktivität Ld und die Quadraturinduktivität Lq bevorzugt nicht konstant sind.

**6.** Verfahren zur Steuerung nach einem der vorhergehenden Ansprüche, bei dem der rekursive Algorithmus (ALR) ausgehend von einem geeigneten anfänglichen oder vorhergehenden Wert eine rekursive Lösung von Lagrange- Gleichungen des Gleichungssystems durchführt und sich schreibt: $X_{y,k} = X_{y,k} - (J_{y,k})^{-1} \nabla L_{y,k}$, wobei X ein Vektor ist, der die optimalen Stromsollwerte und die Faktoren der Einschränkungen der Lagrange-Gleichungen der Betriebsbereiche enthält, k das Zeitinkrement ist, der Index y für die Betriebsbereiche steht, $\nabla L_{y,k-1}$ der Gradient der Lagrange- Gleichungen ist, $J_{y,k-1}$ die Jacobi-Matrix ist.

**7.** Verfahren zur Steuerung nach Anspruch 6, bei dem der rekursive Algorithmus (ALR) eine Newton-Raphson-Methode erster Ordnung durchführt, um die Jacobi-Matrix des Gleichungssystems zu entwickeln.

**8.** Verfahren zur Steuerung nach einem der vorhergehenden Ansprüche, bei dem durch einen Schätzer die Vorhersage einer absoluten Spannung mittels der Stromsollwerte ($i_d{}^{sp}$, $i_q{}^{sp}$) oder mittels Messwerten der Ströme ($i_d{}^{mes}$, $i_q{}^{mes}$) in den Phasen der elektrischen Maschine (MEL) bestimmt wird.

**9.** Verfahren zur Steuerung nach einem der vorhergehenden Ansprüche, bei dem die Spannungssollwerte ($V_d{}^{sp}$, $V_q{}^{sp}$) mittels mindestens eines Proportional-Integral-Reglers (PI) und der Stromsollwerte ($i_d{}^{sp}$, $i_q{}^{sp}$) bestimmt werden.

**10.** Verfahren zur Steuerung nach einem der Ansprüche 8 oder 9, bei dem der Korrekturparameter (Pco) durch Durchführung der folgenden Schritte bestimmt wird:

i) Bestimmen einer Vorhersage der absoluten Spannung ($v_{abs}{}^{pred}$) ;
ii) Bestimmen der Spannungssollwerte ($V_d{}^{sp}$, $V_q{}^{sp}$);

iii) Berechnen einer absoluten Sollspannung anhand der Formel: $V_{abs}^{sp} = \sqrt{V_d^{sp\,2} + V_q^{sp\,2}}$ , wobei $V_d{}^{sp}$ und $V_q{}^{sp}$ die Direktbeziehungsweise Quadraturspannungssollwerte sind;
iv) Vergleichen der Vorhersage der absoluten Spannung ($v_{abs}{}^{pred}$) mit der absoluten Sollspannung ($v_{abs}{}^{sp}$); und
v) Ableiten des Korrekturparameters (Pco) ausgehend von dem Vergleich.

**11.** Verfahren zur Steuerung nach einem der Ansprüche 9 oder 10, bei dem das Steuersignal mittels der Spannungssollwerte ($V_d{}^{sp}$, $V_q{}^{sp}$) und einer vektoriellen Kontrolle (SVM) bestimmt wird.

12. Verfahren zur Steuerung nach einem der vorhergehenden Ansprüche, bei dem die korrigierte Betriebsvariable (VAR$^{corr}$) die Drehzahl der elektrischen Maschine, die Gleichstrombusspannung des Wechselrichters oder die Norm der maximalen Steuerspannung des Wechselrichters ist.

13. System zur Steuerung einer elektrischen Synchronmaschine (MEL), umfassend einen Wechselrichter (OND), der mit Schaltarmen versehen ist, einen Rechner (CAL) und einen Speicher, der dazu ausgestaltet ist, die Schritte des Verfahrens zur Steuerung nach einem der vorhergehenden Ansprüche durchzuführen, um den Wechselrichter (OND) zu steuern, wobei die elektrische Maschine (MEL) bevorzugt eine permanentmagnetunterstützte Synchronreluktanzmaschine oder eine Synchronmaschine mit Permanentmagneten ist.

**Claims**

1. Method for controlling an electric machine (MEL) controlled by an inverter (OND) provided with several switching arms, wherein the following steps are implemented:

   a. a torque setpoint (Cem*) of said electric machine (MEL) is acquired;
   b. a setpoint or a measurement of a plurality of operating variables (VAF) of said electric machine (MEL) is acquired;

   said method being **characterized in that** at least the following steps are implemented:

   c. a correction parameter (Pco) for one of said operating variables (VAF) is determined as a function of an absolute voltage prediction which is dependent on currents in the phases of said electric machine and as a function of voltage setpoints;
   d. a zone of operation (ZON) of said electric machine (MEL) is identified as a function of said torque setpoint and said operating variables of said electric machine, one of said operating variables being corrected by means of said correction parameter;
   e. current setpoints of said electric machine are determined (DET) as a function of said acquired torque setpoint (Cem*), said acquired operating variables (VAF), one of said operating variables being corrected (VAR$^{corr}$) by means of said correction parameter (Pco), and by means of a recursive algorithm (ALR) that solves a system of equations that depends on said identified zone of operation and on a dynamic model (MOD) of said electric machine, said dynamic model (MOD) of said electric machine relating in particular the torque of the electric machine to the currents of said electric machine;
   f. a switching control signal for said inverter (OND) is determined by means of said current setpoints; and
   g. said inverter (OND) is controlled by means of said switching control signal.

2. Control method according to Claim 1, wherein at least two zones of operation (ZON) of said electric machine, which are delimited by a predefined threshold (SEU), are defined beforehand for at least one operating variable (VAF), and said threshold (SEU) is preferably predefined as a function of a constraint of use of said electric machine, such as a maximum or a minimum of said operating variable under consideration.

3. Control method according to either of the preceding claims, wherein said at least one operating variable (VAF) is chosen from the voltage amplitude of said electric machine, the current amplitude of said electric machine, the rotational speed of the rotor of said electric machine, and a temperature of the electric machine.

4. Control method according to Claim 3, wherein the following zones of operation are defined:

   • A first zone of operation (zone1) for which the current amplitude is lower than a current threshold and the voltage amplitude is lower than a voltage threshold,
   • A second zone of operation (zone2) for which the current amplitude is greater than or equal to said current threshold and the voltage amplitude is lower than said voltage threshold,
   • A third zone of operation (zone3) for which the current amplitude is greater than or equal to said current threshold, the voltage amplitude is greater than or equal to said voltage threshold, and the rotational speed of the rotor is lower than the maximum power-maintaining rotational speed of said electric machine,
   • A fourth zone of operation (zone4) for which the current amplitude is lower than said current threshold and the voltage amplitude is greater than or equal to said voltage threshold, and
   • Possibly a fifth zone of operation (zone5) for which the current amplitude is greater than or equal to said current threshold, the voltage amplitude is greater than or equal to said voltage threshold, and the rotational speed of the rotor is greater than said maximum power-maintaining rotational speed of said electric machine.

**5.** Control method according to one of the preceding claims, wherein said dynamic model (MOD) of said electric machine is constructed based on the following equations:

$$\begin{cases} \dfrac{di_d}{dt} = -\dfrac{R_s}{L_d} i_d + \dfrac{L_q}{L_d}\omega\, i_q + \dfrac{1}{L_d} v_d \\[2mm] \dfrac{di_q}{dt} = -\dfrac{R_s}{L_q} i_q - \dfrac{L_d}{L_q}\omega i_d + \dfrac{1}{L_q} v_q - \dfrac{\phi}{L_q}\omega \end{cases}$$

and $\quad C_{em} = \frac{3}{2} P(\phi_d i_q - \phi_q i_d)\quad$ with $i_d$, $i_q$: the direct and quadrature components of the stator current of said electric machine, $v_d$, $v_q$: the direct and quadrature components of the voltage of said stator of said electric machine, $\Phi$ the flux of the magnets of the rotor of said electric machine, with $\Phi_d$ the direct flux, and $\Phi_q$ the quadrature flux, $\omega$ the electric angular frequency, $R_s$ the stator resistance, $L_d$ the direct inductance of said electric machine, $L_q$ the quadrature inductance of said electric machine, $C_{em}$ the torque of the electric machine, P is the number of pole pairs of said electric machine, said stator resistance and said flux of the magnets of the rotor of said electric machine preferably being dependent on their respective temperatures and/or the direct inductance Ld and quadrature inductance Lq preferably being non-constant.

**6.** Control method according to one of the preceding claims, wherein said recursive algorithm (ALR), starting from an appropriate initial or previous value, recursively solves Lagrange equations of said system of equations, and is written: $X_{y,k} = X_{y,k-1} (J_{y,k})^{-1}\nabla L_{y,k}$ with X a vector containing the optimal current setpoints and the factors of the constraints of the Lagrange equations of the zones of operation, k the time increment, the index y represents said zones of operation, $\nabla L_{y,k-1}$ the gradient of the Lagrange equations, $J_{y,k-1}$ the Jacobian matrix.

**7.** Control method according to Claim 6, wherein said recursive algorithm (ALR) implements a first-order Newton-Raphson method to develop said Jacobian matrix of said system of equations.

**8.** Control method according to one of the preceding claims, wherein said absolute voltage prediction is determined by an estimator by means of said current setpoints ($i_d^{sp}$, $i_q^{sp}$) or by means of measurements of said currents ($i_d^{mes}$, $i_q^{mes}$) in the phases of said electric machine (MEL).

**9.** Control method according to one of the preceding claims, wherein said voltage setpoints ($V_d^{sp}$, $V_q^{sp}$) are determined by means of at least one proportional-integral controller (PI) and said current setpoints ($i_d^{sp}$, $i_q^{sp}$).

**10.** Control method according to either of Claims 8 and 9, wherein said correction parameter (Pco) is determined by implementing the following steps:

i) an absolute voltage prediction ($v_{abs}^{pred}$) is determined;
ii) said voltage setpoints ($V_d^{sp}$, $V_q^{sp}$) are determined;

iii) a setpoint absolute voltage is calculated using the formula: $V_{abs}^{sp} = \sqrt{V_d^{sp\,2} + V_q^{sp\,2}}$ , where $V_d^{sp}$ and $V_q^{sp}$ are the direct and quadrature voltage setpoints, respectively;
iv) said absolute voltage prediction ($v_{abs}^{pred}$) is compared with said setpoint absolute voltage ($v_{abs}^{sp}$); and
v) said correction parameter (Pco) is deduced therefrom on the basis of said comparison.

**11.** Control method according to either of Claims 9 and 10, wherein said control signal is determined by means of said voltage setpoints ($V_d^{sp}$, $V_q^{sp}$) and vector control (SVM) .

**12.** Control method according to one of the preceding claims, wherein said corrected operating variable (VAR$^{corr}$) is the rotational speed of said electric machine, the DC bus voltage of the inverter or the norm of the maximum control voltage of the inverter.

13. System for controlling a synchronous electric machine (MEL) comprising an inverter (OND) provided with switching arms, a computer (CAL) and a memory which is configured to implement the steps of the control method according to one of the preceding claims in order to control said inverter (OND), said electric machine (MEL) preferably being a permanent-magnet-assisted synchronous reluctance machine or a permanent-magnet synchronous machine.

[Fig 1]

[Fig 2]

[Fig 3]

[Fig 4]

[Fig 5]

[Fig 6]

[Fig 7]

[Fig 8]

**EP 4 454 119 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3051296 A1
- US 9479102 B
- US 2017085200 A1
- US 9768719 B
- US 7586286 B
- US 6936991 B
- US 9614473 B